# EUROPÄISCHE PATENTSCHRIFT

(11) **EP 1 584 945 B1**
(45) Veröffentlichungstag und Bekanntmachung des Hinweises auf die Patenterteilung: **24.06.2009**
(21) Anmeldenummer: 04008519.3
(22) Anmeldetag: 08.04.2004
(51) Int. Cl.: G01S 5/16, B25J 9/16

(54) **Steuermodul und Ventilbatterie zur Zusammenwirkung mit einer Bilderfassungsvorrichtung**
Control module and array of valves associated with an imaging device
Module de contrôle et batterie de soupapes associée à un système de prise d'images

(43) Veröffentlichungstag der Anmeldung: 12.10.2005
(73) Patentinhaber: FESTO AG & Co. KG, 73734 Esslingen (DE)
(72) Erfinder: Hufnagl, Herbert, Dr., 73730 Esslingen (DE); Haussmann, Frank, 72644 Oberboihingen (DE)
(74) Vertreter: Bregenzer, Michael

(56) Entgegenhaltungen:
- EP-A- 0 152 594
- EP-A- 0 391 269

## Beschreibung

Die Erfindung betrifft eine Anordnung mit einem Steuermodul zur Ansteuerung mindestens eines Aktors, mit dem ein Objekt bewegbar ist, und mit einer mit dem Steuermodul verbundenen Bilderfassungsvorrichtung zur Erfassung von Bilddaten des bewegten Objekts.

Eine solche Anordnung ist beispielsweise aus DE 100 33 366 A1 bekannt. Das Steuermodul wird beispielsweise durch einen Steuer-Rechner verkörpert, der eine Handhabungsvorrichtung mit mehreren Aktoren ansteuert. Der Prozessor bzw. die auf diesem ablaufenden Programme bilden dabei die Steuermittel. Eine nicht näher erläuterte Schnittstelle ermöglicht den Anschluss einer Videokamera, die Bilddaten an den Steuer-Rechner liefert. Der Steuer-Rechner analysiert die Bilddaten und prüft, ob sich eine vorbestimmte Markierung innerhalb von vorbestimmten Bildbereichsausschnitten befindet. Anhand der von der Videokamera übermittelten Bilddaten regelt der Steuer-Rechner die Position eines Greifers der Handhabungsvorrichtung.

Aus EP 0 152 594 ist ebenfalls eine Anordnung der eingangs genannten Art mit einer Bilderfassungsvorrichtung in Gestalt eines optoelektronischen Bildsensors bekannt. Die Anordnung umfasst eine dem Bildsensor nachgeordnete, sozusagen ein Steuermodul bildende Grauwertbildverarbeitungseinrichtung, die eine Einrichtung zur digitalen Quantisierung von Sensorbildern bzw. vorgegebenen Referenzbildern in mehr als zwei Grauwertstufen, eine Einrichtung zur Istlageerfassung der digital quantisierten Sensorbilder bzw. zur Sollagevorgabe der digital quantisierten Referenzbilder und eine Einrichtung zum Sollwert-Istwertvergleich sowie erforderlichenfalls zur Bereitstellung von Auswertesignalen und/oder Stellsignalen für nachgeschaltete Stellglieder aufweist. Den Einrichtungen zur digitalen Quantisierung der Sensorbilder und der Referenzbilder sind Realzeit-Datenreduktionseinrichtungen nachgeschaltet, die die digital quantisierten Bildinformationen und die vorgegebenen, digital quantisierten Referenzbilder auf wenige Grauwertmerkmale reduzieren.

Die Videokamera gemäß DE 100 33 366 A1 und der Bildsensor gemäß EP 0 152 594 erzeugen eine große Menge von Bilddaten, so dass Maßnahmen zur Datenreduktion auf Seiten des Steuer-Rechners bzw. der Grauwertbildverarbeitungseinrichtung gemäß EP 0 152 594 notwendig sind. Dadurch ist allerdings auch die Regelungsfähigkeit des Steuer-Rechners im einen oder anderen Anwendungsfall eingeschränkt.

Es ist daher die Aufgabe der vorliegenden Erfindung, eine Anordnung der eingangs genannten Art zu optimieren, insbesondere Steuerungsfähigkeiten des Steuermoduls zu verbessern.

Zur Lösung der Aufgabe ist eine Anordnung gemäß der technischen Lehre des Anspruchs 1 vorgesehen.

Erfindungsgemäß ist eine Aufgabenteilung vorgesehen: Die üblicherweise rechenaufwändige Bildanalyse wird durch die Bilderfassungsvorrichtung durchgeführt, die die Bildanalysedaten erzeugt. Das Steuermodul ist durch die große Menge der Bilddaten nicht belastet, sondern konzentriert sich auf die Auswertung der Bildanalysedaten, die im Vergleich zu den Bilddaten einen geringeren Umfang haben.

Die erfindungsgemäße Bilderfassungsvorrichtung erfasst in einer bevorzugten Ausführungsform als eine Hochgeschwindigkeitskamera vorzugsweise 200 bis 400 Bilder pro Sekunde, wobei auch Ausführungsformen mit größerer Leistungsfähigkeit, beispielsweise 1.000 Bilder pro Sekunde, oder kleinerer Leistungsfähigkeit mit mehr als etwa 50-60 Einzelbildern pro Sekunde, beispielsweise 100 Bilder pro Sekunde, ohne weiteres möglich sind. Es entsteht eine verhältnismäßig große Menge an Bilddaten, die durch das Steuermodul nicht verarbeitet werden muss. Vielmehr "reduziert" die Bilderfassungsvorrichtung die Bilddaten auf Bildanalysedaten, die zweckmäßigerweise Qualitätsdaten des bewegten Objekts enthalten, beispielsweise eine Teilenummer des Objekts, einen Identifizierungs-Code des Objekts, Vermessungsdaten und/oder Abstandsdaten des Objekts, eine Ausrichtung des Objekts oder eine sonstige Qualität des Objekts, beispielsweise Oberflächendaten zur Qualifizierung der Oberfläche des bewegten Objekts.

In den Bildanalysedaten können geometrische und/oder dynamische Eigenschaften des bewegten Objekts enthalten sein, wenn dies entlang einer Bewegungsbahn durch den mindestens einen Aktor bewegt wird. Die dynamischen Eigenschaften enthalten beispielsweise die Geschwindigkeit und/oder die Beschleunigung des Objekts an einer oder mehreren Positionen entlang der Bewegungsbahn. Es versteht sich, dass die dynamische Analyse auch entlang der gesamten Bewegungsbahn oder entlang von Teilabschnitten der Bewegungsbahn möglich ist.

Das Steuermodul kann in Hardware und/oder Software ausgeführt sein. Der oder die durch das Steuermodul gesteuerten Aktoren sind beispielsweise fluidtechnisch, vorzugsweise pneumatisch, antreibbar. Es sind aber auch elektrische Aktoren, beispielsweise elektrische Linear- oder Drehantriebe oder kombinierte fluidtechnische und elektrische Antriebe, durch das erfindungsgemäße Steuermodul steuerbar. Das Steuermodul enthält beispielsweise Programme, die eine Ablaufsteuerung zur Ansteuerung des mindestens einen Aktors enthalten.

Besonders bevorzugt ist eine Ausgestaltung des Steuermoduls zur Ansteuerung einer fluidtechnischen, insbesondere pneumatischen Ventilbatterie. Das Steuermodul enthält zweckmäßigerweise ein Trägerelement, in dem Fluidkanäle zur Versorgung von Ventilmodulen mit Fluid, beispielsweise Druckluft, enthalten sein können. Die Ventilbatterie weist z.B. mehrere Arbeitsanschlüsse zum Anschluss und Ansteuern von fluidtechnisch betreibbaren Aktoren, beispielsweise pneumatischen Linearantrieben, auf. Die Ventilmodule sind an in einer Reihenrichtung angeordneten Montageplätzen montiert. Die Ventilmodule enthalten Ventile mit einem oder mehreren beweglichen Ventilgliedern.

Mit Hilfe der Schnittstellenmittel und/oder der Steuermittel kann das Steuermodul die Bilderfassungsvorrichtung vorteilhafterweise aktivieren oder deaktivieren, beispielsweise eine Bildanalyse einschalten oder ausschalten. Dadurch ist eine weitere Datenreduktion möglich.

Die Steuermittel steuern den mindestens einen Aktor direkt oder indirekt an. Für die indirekte Ansteuerung eignet sich beispielsweise auch eine dezentrale, von dem Steuermodul abgesetzte Ein-/Ausgabevorrichtung.

Die Bilderfassungsvorrichtung ist zweckmäßigerweise zur Auswertung der Bilddaten in einer zur Bewegungsgeschwindigkeit des mindestens einen Aktors korrelierenden Geschwindigkeit ausgestaltet, beispielsweise zu einer Echtzeitauswertung.

In dem Steuermodul und/oder in der Bilderfassungsvorrichtung sind zweckmäßigerweise Speichermittel vorgesehen, in denen die Bildanalysedaten und/oder Bilddaten speicherbar sind. Die Bilddaten enthalten beispielsweise Bildsequenzen, mit denen eine spätere Analyse eines Bewegungsvorgangs möglich ist. Zweckmäßigerweise werden die jeweils ältesten Bilddaten durch neue Bilddaten überschrieben. Das erfindungsgemäße Steuermodul bzw. die Bilderfassungsvorrichtung speichern Bilddaten oder Bildanalysedaten vorteilhaft auch für längere Zeit, insbesondere in Abhängigkeit von einer Auslösebedingung, beispielsweise bei einem entsprechenden Steuerbefehl, in einer Alarmsituation oder einer Notaus-Situation, bei der das Steuermodul den mindestens einen Aktor anhält. Die Schnittstellenmittel des Steuermoduls senden beispielsweise einen Speicherbefehl zum Speichern einer Bildsequenz an die Bilderfassungsvorrichtung. Es ist auch möglich, dass die Steuermittel einen entsprechenden Abrufbefehl zum Abrufen einer bei der Bilderfassungsvorrichtung gespeicherten Bildsequenz an diese senden. Ferner ist eine Situation möglich, bei der das Steuermodul einen Analysebefehl an die Bilderfassungsvorrichtung sendet, mit der die Bilderfassungsvorrichtung zur Analyse gespeicherter Bilddaten instruiert wird.

Erfindungsgemäß sind auch weitgehende Parametrierungs-und/oder Programmierungsmöglichkeiten gegeben. Zu einen ist das Steuermodul zweckmäßigerweise parametrierbar und/oder programmierbar, wobei beispielsweise Parameter des zu bewegenden Objekts, eine Bewegungsbahn oder insgesamt Steuerprogramme in der Art von speicherprogrammierbaren Programmen, bei dem Steuermodul programmierbar sind. Zum Andern sind auch auf Seiten der Bilderfassungsvorrichtung Parametrierungs- und Programmierungsfunktionen zweckmäßig. Dabei ist das Steuermodul zweckmäßigerweise so ausgestaltet, dass es die entsprechende Parametrierung oder Programmierung der Bilderfassungsvorrichtung vornimmt, das heißt beispielsweise Prüfparameter und/oder Prüfprogramme zur Analyse der Bilddaten oder dergleichen an die Bilderfassungsvorrichtung sendet.

Nachfolgend wird die Erfindung anhand eines Ausführungsbeispiels unter Bezugnahme auf die Zeichnung näher erläutert. Es zeigen:

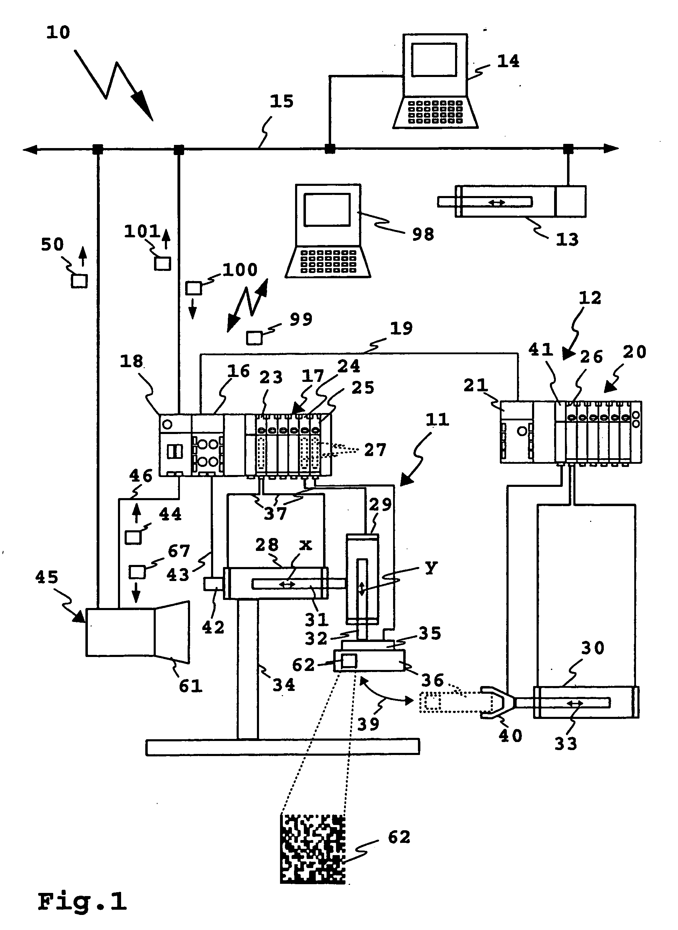

- Fig. 1: ein schematisch dargestelltes Handhabungssystem mit Handhabungsvorrichtungen, die durch ein erfindungsgemäßes, mit einer Bilderfassungsvorrichtung zusammenwirkendes Steuermodul gesteuert sind,

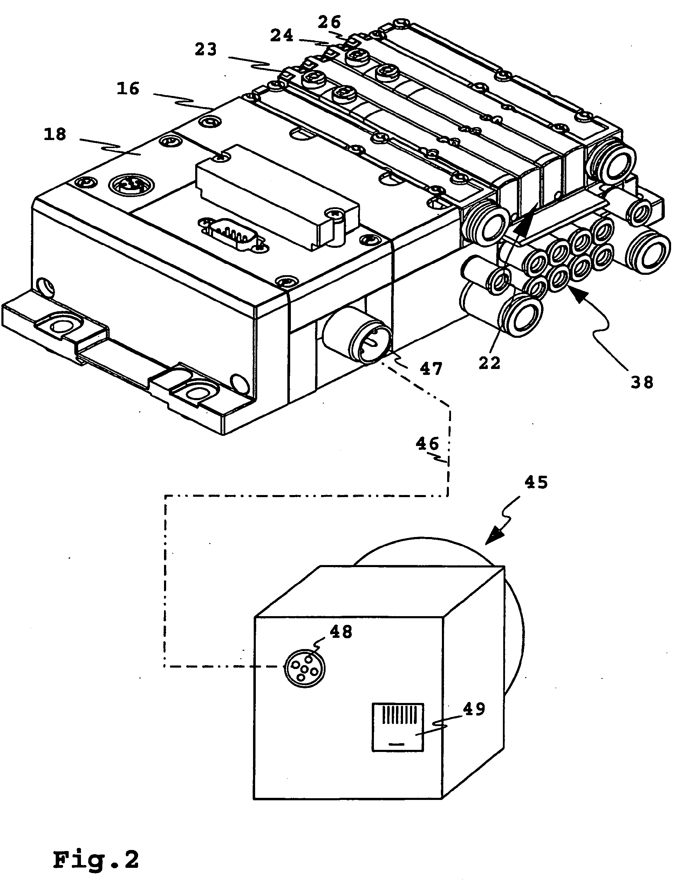

- Fig. 2: das Steuermodul gemäß Fig. 1 als Bestandteil einer Ventilbatterie sowie die Bilderfassungsvorrichtung gemäß Fig. 1,

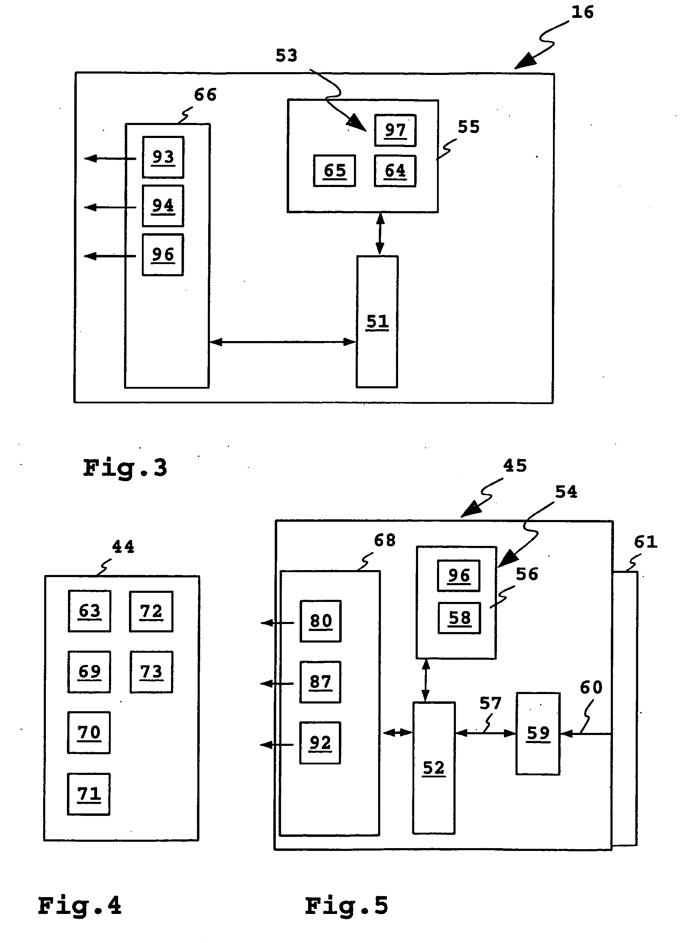

- Fig. 3: eine schematische, funktionelle Darstellung des Steuermoduls gemäß Fig. 1,
- Fig. 4: eine schematische Darstellung von Bildanalysedaten, die die Bilderfassungsvorrichtung gemäß Fig. 1 erzeugt,
- Fig. 5: eine schematische Ansicht der Bilderfassungsvorrichtung gemäß Fig. 1, und
- Fig. 6, 7: geometrische und dynamische Verläufe einer Bewegungsbahn, die ein durch die Handhabungsvorrichtungen gemäß Fig. 1 bewegtes Objekt durchläuft.

Ein Handhabungssystem 10 enthält miteinander gekoppelte Handhabungsvorrichtungen 11, 12 sowie weitere Aktoren, beispielsweise einen Aktor 13, die von einem Steuer-Rechner 14 über einen Steuerbus 15 gesteuert und überwacht werden. Der Steuer-Rechner 14 bildet sozusagen eine zentrale Steuerung für den Aktor 13 bzw. die Handhabungsvorrichtungen 11, 12.

Ein Steuermodul 16 bildet eine lokale Steuerungsvorrichtung für die Handhabungsvorrichtungen 11, 12. Das Steuermodul 16 ist ein Modul einer Ventilbatterie 17, die über ein Verbindungsmodul 18 mit dem Steuerbus 15 verbunden ist. Das Steuermodul 16 steuert die Ventilbatterie 17 und über eine Verbindung 19 eine Ventilbatterie 20 über ein Ein-/Ausgabemodul 21. Das Ein-/Ausgabemodul 21 kann Steuerbefehle auf der Verbindung 19 empfangen und zur Ansteuerung von Ventilmodulen der Ventilbatterie 20 ausgeben und in umgekehrter Richtung Meldungen dieser Ventilmodule über die Verbindung 19 an das Steuermodul 16 melden. Bei der Verbindung 19 handelt es sich beispielsweise um eine Verbindung über einen Feldbus.

Die Ventilbatterien 17, 20 enthalten in einer Reihenrichtung angeordnete Montageplätze 22 für Ventilmodule, von denen beispielhaft Ventilmodule 23, 24, 25 und 26 nachfolgend näher erläutert werden. Die Ventilmodule 23-26 sind durch Steuerbefehle des Steuermoduls 16 steuerbar. Die Steuerbefehle werden beispielsweise auf einem internen Bus der Ventilbatterien 17, 20 übermittelt.

Die Ventilmodule 23-26 enthalten eines oder mehrere bewegliche Ventilglieder 27 zur Beaufschlagung von fluidtechnischen Aktoren mit Fluid, beispielsweise Aktoren 28, 29, 30 der Handhabungsvorrichtungen 11, 12.

Bei den Aktoren 28-30 handelt es sich vorliegend um pneumatische Aktoren, insbesondere pneumatische Linearantriebe mit linear beweglichen Aktorgliedern 31, 32, 33. Es versteht sich, dass das Steuermodul 16 bzw. das Ein-/Ausgabemodul 21 auch andersartige Aktoren, beispielsweise Drehantriebe, ansteuern können bzw. dass auch andere Antriebsprinzipien, beispielsweise elektrische Aktoren, möglich sind.

Der Aktor 28 ist horizontal an einem Ständer 33 angeordnet, so dass sein Aktorglied 31, beispielsweise eine Kolbenstange, in X-Richtung beweglich ist. Vorn, am freien Ende des Aktorglieds 31, ist der Aktor 29 befestigt. Der Aktor 29 ist vertikal orientiert, so dass sein Aktorglied 32, ebenfalls eine Kolbenstange, in Y-Richtung beweglich ist. Am vorderen, freien und nach unten gerichteten Ende des Aktorglieds 32 ist eine Haltevorrichtung in Gestalt eines Saugers 35 befestigt, mit der ein durch die Haltevorrichtung 11 zu bewegendes Objekt 36 gehalten werden kann.

Die Ventilmodule 23, 24 betätigen die Aktoren 28, 29, die mit Fluidleitungen 37 an Arbeitsanschlüsse 38 der Ventilbatterie 17 angeschlossen sind. Das Ventilmodul 25 betätigt den Sauger 35. Die Ventilbatterie 17 ist an eine nicht dargestellte Druckluftquelle bzw. eine nicht dargestellte Vakuumvorrichtung angeschlossen, die die zur Betätigung der Aktoren 28, 29 und des Saugers 35 notwendige Druckluft bzw. den notwendigen Unterdruck erzeugen.

Die Handhabungsvorrichtung 11 bewegt das Objekt 36 entlang einer schematisch angedeuteten Bewegungsbahn 39 und übergibt es der Handhabungsvorrichtung 12. Die Handhabungsvorrichtung 12 ergreift das Objekt 36 mit einem Greifer 40, der vorliegend elektrisch mittels eines Ausgabemoduls 41 betätigbar ist. Der Aktor 30 wird durch das Ventilmodul 26 angesteuert und pneumatisch durch entsprechende Druckluftbeaufschlagung bzw. Entlüftung betätigt, wofür die Ventilbatterie 20 an eine nicht dargestellte Druckluftquelle angeschlossen ist.

Das Steuermodul 16 kann mit mehreren, im Wesentlichen nicht dargestellten Sensoren, beispielsweise Abstandssensoren, Positionssensoren oder dergleichen, zur Steuerung der Aktoren 28-30 bzw. der Halteeinrichtung 35 und des Greifers 40 kooperieren. Beispielhaft ist ein Positionssensor 42 eingezeichnet, der am Aktor 28 angeordnet ist und ein Positionssignal 43 an das Steuermodul 16 übermittelt, das die jeweilige Position, beispielsweise Endposition, des Aktorglieds 31 enthält. Derartige Sensoren sind zweckmäßig, jedoch nicht zwingend erforderlich, denn das Steuermodul 16 steuert die Handhabungsvorrichtungen 11, 12 anhand von Bildanalysedaten 44, die eine Bilderfassungsvorrichtung 45 auf einer Verbindung 46 dem Verbindungsmodul 18 und somit dem Steuermodul 16 übermittelt.

Die Verbindung 46 kann eine drahtgebundene Verbindung, beispielsweise über einen Feldbus, oder eine drahtlose Verbindung sein. Für die drahtgebundene Variante sind Anschlüsse 47, 48 bei der Ventilbatterie 17 bzw. der Bilderfassungsvorrichtung 45 vorhanden, wobei die Anschlüsse 47, 48 vorzugsweise in einer hohen Schutzart, beispielsweise IP 65/67, realisiert sind.

Die Bilderfassungsvorrichtung hat weiterhin einen Anschluss 49, beispielsweise einen RJ-45-Steckanschluss, zum Anschluss des Steuerbusses 15. Die Bilderfassungsvorrichtung 45 ist über den Steuerbus 15 beispielsweise steuerbar, parametrierbar oder dergleichen. Der Steuerbus 15, bei dem es sich beispielsweise um eine Ethernet-Verbindung handelt, hat eine solche Bandbreite, dass die Bilderfassungsvorrichtung 45 auch Bilddaten 50 an den Steuer-Rechner 14 übermitteln kann, die beispielsweise das Objekt 36 bei der Bewegung durch die Handhabungsvorrichtungen 11, 12 zeigen.

Prinzipiell wäre es nun möglich, dass auch das Steuermodul 16 diese Bilddaten 50 erhält und anhand dieser Bilddaten die Handhabungsvorrichtungen 11, 12 steuert. Dies würde allerdings bedeuten, dass das Steuermodul 16 eine verhältnismäßig große Menge an Bilddaten zu verarbeiten hätte, was bei der zur Steuerung von Handhabungsvorrichtungen gewünschten Echtzeitfähigkeit eine erhebliche Rechenbelastung des Steuermoduls 16 zur Folge hätte. Erfindungsgemäß ist nun vorgesehen, dass die Bilderfassungsvorrichtung 45 anstelle der Bilddaten 50 die Bildanalysedaten 44 an das Steuermodul 16 übermittelt, die es anhand von Bilddaten des bewegten Objekts 36 ermittelt hat. Das Steuermodul 16 steuert die Handhabungsvorrichtungen 11, 12 anhand der Bildanalysedaten 44.

Das Steuermodul 16 und die Bilderfassungsvorrichtung 45 enthalten Prozessoren 51, 52 zum Ausführen von Programmcode von Programmmodulen 53, 54, die in Speicher 55, 56 des Steuermoduls 16 und der Bilderfassungsvorrichtung 45 abgelegt sind. Die Leistungsfähigkeit der Prozessoren 51, 52 ist an die jeweiligen Erfordernisse des Steuermoduls 16 bzw. der Bilderfassungsvorrichtung 45 angepasst.

Die Bilderfassungsvorrichtung 45 enthält beispielsweise einen besonders leistungsfähigen Bildverarbeitungsprozessor, der aus Bilddaten 57 die Bildanalysedaten 44 unter Mitwirkung eines Analysemoduls 58 der Programmmodule 54 erzeugt. Ein Bildwandler 59, beispielsweise ein CMOS-Bildwandler, erzeugt die digitalen oder analogen Bilddaten 57 anhand von Licht 60, das durch ein Objektiv 61 der Bilderfassungsvorrichtung 45 zum Bildwandler 59 gelangt.

Das Analysemodul 58 erzeugt beispielsweise anhand einer Identifizierungskennung 62, zum Beispiel ein Barcode oder ein Datamatrixcode, die am Objekt 36 angeordnet ist, Identifizierungsdaten 63 zur Identifizierung des Objekts 36. Das Analysemodul 46 kann z.B. anhand der Bilddaten 57 auch Objektmerkmale des Objektes 32 auswerten, um die Identität des Objektes 32 zu ermitteln. Das Steuermodul 16 kann die Bildanalysedaten 44 bei der Bilderfassungsvorrichtung 45 abfragen und erhält dann beispielsweise die Identifizierungsdaten 63. Die eigentliche Identifizierungsfunktion, nämlich das Auffinden und Auswerten der Identifizierungskennung 62, ist durch die Bilderfassungsvorrichtung 45 realisiert, sodass das Steuermodul 16 durch diese Aufgabe nicht belastet ist.

Ein als Steuermittel dienendes Ablauf-Steuermodul 64 des Steuermoduls 16 kann anhand der Identifizierungsdaten 63 die Handhabungsvorrichtungen 11, 12 ansteuern. Das Ablauf-Steuermodul 64 steuert beispielsweise die Handhabungsvorrichtungen 11, 12 in Abhängigkeit von den Identifizierungsdaten 63 unterschiedlich an, wobei beispielsweise für ein erstes Objekt eine erste Bewegungsbahn und für ein zweites Objekt eine zweite Bewegungsbahn ein unterschiedliches Ansaugverhalten des Saugers 35 oder eine sonstige unterschiedliche Handhabung vorbestimmt ist.

Das Ablauf-Steuermodul 64 oder ein separates Kamera-Steuermodul 65 steuern die Bilderfassungsvorrichtung 45 über Schnittstellenmittel 66 an. Beispielsweise sendet das Kamera-Steuermodul 65 einen Einschaltbefehl 67 an die Bilderfassungsvorrichtung 45, mit dem diese zum Starten einer Bildanalyse angewiesen wird. Die Bilderfassungsvorrichtung 45 empfängt den Einschaltbefehl 67 mittels Schnittstellenmitteln 68, die wie die Schnittstellenmittel 66 beispielsweise einen Feldbus-Controller enthalten.

Die Bildanalysedaten 44 können auch weitere, das bewegte Objekt 36 qualifizierende Qualitätsdaten enthalten, beispielsweise Abstandsdaten 69, Oberflächendaten 70, Geometriedaten 71, Dynamikdaten 72, Vermessungsdaten 73 oder dergleichen. Die Abstandsdaten 69 enthalten beispielsweise den jeweiligen Abstand des Objekts 36 vom Ständer 34, vom Aktor 30 oder dergleichen. Die Oberflächendaten 70 charakterisieren die Oberfläche des Objekts 36, beispielsweise dessen Farbe, dessen Material oder dergleichen. Die Vermessungsdaten 73 enthalten die Abmessungen des Objekts 36 in einer oder mehreren Dimensionen. Die Geometriedaten 71 können z.B. die Lage des Objekts 36, beispielsweise dessen Ausrichtung, enthalten.

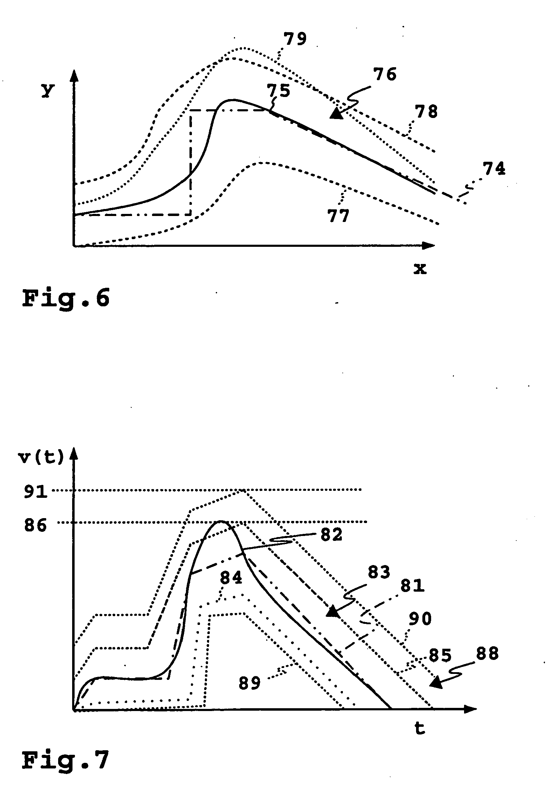

Die Geometriedaten 71 enthalten vorliegend den geometrischen Verlauf der Bewegungsbahn 39, von dem mehrere schematisierte Beispiele in Fig. 6 eingezeichnet sind. Ein idealer, durch die Aktoren 28, 29, 30 zu bewirkender geometrischer Verlauf 74 ist strichpunktiert dargestellt. Typischerweise stellt sich jedoch durch Überlagerung der Bewegungen der Aktoren 28-30 ein typischer geometrischer Verlauf 75 ein. Das Analysemodul 58 analysiert, ob der jeweilige geometrische Verlauf 75 sich innerhalb eines geometrischen Toleranzbandes 76 befindet, das durch einen unteren und einen oberen Grenzverlauf 77, 78 begrenzt ist. Beispielsweise durch eine Fehlfunktion, durch externe Einflüsse oder dergleichen ist es nämlich möglich, dass das Objekt 36 entlang eines geometrischen Fehler-Verlaufs 79 bewegt wird. Der geometrische Fehler-Verlauf 79 durchbricht das Toleranzband 76 nach oben, was durch das Analysemodul 58 ermittelt wird. Das Analysemodul 58 sendet dann eine Warn-Information 80 an das Steuermodul 16, sodass das Ablauf-Steuermodul 64 beispielsweise die Aktoren 28-30 zu einer modifizierten Handhabung des Objekts 36 ansteuert, bei der das Objekt 36 wieder innerhalb des Toleranzbandes 76 bewegt wird.

Das Analysemodul 58 kann zudem eine dynamische Bewegungsanalyse des Objekts 36 bei einer Bewegung entlang der Bewegungsbahn 39 durchführen. Das Analysemodul 58 prüft dabei mindestens eine dynamische Eigenschaft des Objekts 36 an einer oder mehreren Positionen entlang der Bewegungsbahn 39, beispielsweise die Geschwindigkeit und/oder die Beschleunigung des Objekts 36 an einer oder mehreren Positionen. Beispielhaft ist eine Geschwindigkeitsanalyse in Fig. 7 schematisiert dargestellt.

Das Objekt 36 hat bei einer Handhabung durch die Handhabungsvorrichtungen 11, 12 einen idealen Geschwindigkeitsverlauf 81. In der Praxis ist jedoch häufig ein typischer, wenn auch nicht unproblematischer Geschwindigkeitsverlauf 82 zu beobachten. Der typische Geschwindigkeitsverlauf 82 befindet sich zwar im Wesentlichen, jedoch nicht vollständig innerhalb eines Alarm-Toleranzbandes 83, das durch einen unteren und einen oberen Alarm-Grenzverlauf 84, 85 begrenzt ist. Der Geschwindigkeitsverlauf 82 durchstößt dieses Alarm-Toleranzband 83 nach oben und erreicht eine Alarm-Geschwindigkeit 86. Bei dieser Alarm-Geschwindigkeit 86 sendet das Analysemodul 58 eine Alarm-Meldung 87 an das Steuermodul 16. Bei Eingang der Alarm-Meldung 87 reduziert das Ablauf-Steuermodul 64 beispielsweise die Geschwindigkeit der Aktoren 28, 29. Neben dem Alarm-Toleranzband 83 ist ferner ein Geschwindigkeits-Not-Toleranzband 88 definiert, das durch einen unteren und einen oberen Not-Grenzverlauf 89, 90 begrenzt ist. Ferner ist eine maximale Not-Geschwindigkeit 91 festgelegt. Wenn der Geschwindigkeitsverlauf 82 auch die Not-Geschwindigkeit 91 erreichen würde und/oder das Not-Toleranzband 88 über- oder unterschreiten würde, würde das Analysemodul 58 eine Not-Meldung 92 an das Steuermodul 16 senden. Wenn das Ablauf-Steuermodul 64 die Not-Meldung 92 erhält, schaltet es beispielsweise die Aktoren 28-30 ab und/oder steuert sie zur Einnahme einer sicheren Position an.

Das Kamera-Steuermodul 65 kann die Daten zur Definierung der Toleranzbänder 76, 83 und 88 oder sonstige Parameter-Eigenschaften, beispielsweise typische Identifizierungskennungen oder dergleichen, als Parameterdaten 93 an die Bilderfassungsvorrichtung 45 senden und diese somit parametrieren. Ferner ist es möglich, dass das Kamera-Steuermodul 65 und/oder das Ablauf-Steuermodul 64 einen Speicherbefehl 94 zum Abspeichern der Bilddaten 57 und/oder der Bildanalysedaten in einem Langzeitspeicher 95 der Bilderfassungsvorrichtung 45 an diese senden. Die Bilderfassungsvorrichtung speichert dann beispielsweise die Bilddaten 57 im Langzeitspeicher 95 ab, damit das Steuermodul 16 oder eine sonstige, von der Bilderfassungsvorrichtung 45 separate Vorrichtung, beispielsweise der Steuer-Rechner 14, die Bilddaten 57 bzw. die Bildanalysedaten 44 später mit Hilfe eines Abrufbefehls 96 abrufen können.

Es ist auch möglich, dass das Steuermodul 16 Bildanalysedaten 44 und/oder Bilddaten 57 in einem Langzeitspeicher 97 ablegt, beispielsweise in Abhängigkeit von einem Auslöseereignis, zum Beispiel der vorher erwähnten Not-Abschaltung der Aktoren 28-30.

Das Steuermodul 16 ist parametrierbar, zum Beispiel mit Hilfe einer Parametrierungsvorrichtung 98 und/oder dem Steuer-Rechner 14. Die Parametrierungsvorrichtung 98 ist beispielsweise ein Personal-Computer, der über eine wie beim Ausführungsbeispiel drahtlose und/oder drahtgebundene Verbindung Parameterdaten 99 an das Steuermodul 16 übermittelt. Die Parameterdaten 99 definieren beispielsweise einen Bewegungsäblauf zur Handhabung des Objekts 36, die Toleranzbänder 83, 85 und/oder 76 oder dergleichen. Bevorzugt ist eine Kommunikation in der Art des Internets zwischen der Parametrierungsvorrichtung 98 und dem Steuermodul 16, bei der das Steuermodul 16 beispielsweise in der Art eines Web-Servers arbeitet.

Das Steuermodul 16 steuert die Handhabungsvorrichtungen 11, 12 anhand von Steuerbefehlen 100, die es vom Steuer-Rechner 14 erhält. Ein Steuerbefehl 100 enthält beispielsweise eine Anweisung zum Ergreifen und Übergeben des Objekts 36 an die Handhabungsvorrichtung 12. Eine erfolgte Betätigung der Handhabungsvorrichtungen 11, 12, eine Eigenschaft des Objekts 36 oder dergleichen übermittelt das Steuermodul 16 anhand von Meldungen 101 an den Steuer-Rechner 14.

## Patentansprüche

1. Anordnung mit einem Steuermodul (16) und einer mit dem Steuermodul verbundenen Bilderfassungsvorrichtung (45) zur Erfassung von Bilddaten (57) des bewegten Objekts (36), wobei das Steuermodul Steuermittel (64) zur Ansteuerung mindestens eines Aktors (28,29,30), mit dem ein Objekt (36) bewegbar ist und Schnittstellenmittel (66) für die Bilderfassungsvorrichtung (45) aufweist, **dadurch gekennzeichnet, dass** die Bilderfassungsvorrichtung (45) zur Erzeugung von Bildanalysedaten (44) anhand einer geometrischen und/oder einer dynamischen Analyse einer Bewegungsbahn (39) des bewegten Objekts (36) ausgestaltet ist, und dass die Steuermittel (64) des Steuermoduls (16) zur Ansteuerung des mindestens einen Aktors (28,29,30) in Abhängigkeit der Bildanalysedaten (44) ausgestaltet sind.

2. Anordnung nach Anspruch 1, **dadurch gekennzeichnet, dass** der mindestens eine Aktor (28,29,30) fluidtechnisch und/oder elektrisch antreibbar ist.

3. Anordnung nach Anspruch 1 oder 2, **dadurch gekennzeichnet, dass** das Steuermodul (16) zur Steuerung einer fluidtechnischen Ventilbatterie (17) mit mehreren Arbeitsanschlüssen zum Anschluss und Ansteuern von fluidtechnisch betreibbaren Aktoren (28,29,30) ausgestaltet ist, wobei die Ventilbatterie (17) in einer Reihenrichtung angeordnete Montageplätze (22) für Ventilmodule (23-25) aufweist, die jeweils mindestens ein mit einem beweglichen Ventilglied ausgestattetes Ventil enthalten.

4. Anordnung nach einem der vorhergehenden Ansprüche, **dadurch gekennzeichnet, dass** die Schnittstellenmittel (66) und/oder die Steuermittel (64) des Steuermoduls (16) zum Aktivieren und/oder Deaktivieren der Bilderfassungsvorrichtung (45) für eine Bildanalyse ausgestaltet sind.

5. Anordnung nach einem der vorhergehenden Ansprüche, **dadurch gekennzeichnet, dass** die Steuermittel (64) des Steuermoduls (16) zur direkten oder indirekten Ansteuerung des mindestens einen Aktors (28,29,30) ausgestaltet sind.

6. Anordnung nach einem der vorhergehenden Ansprüche, **dadurch gekennzeichnet, dass** die Bilderfassungsvorrichtung (45) zur Auswertung der Bilddaten (57) in einer zur Bewegungsgeschwindigkeit des mindestens einen Aktors (28,29,30) korrelierenden Geschwindigkeit, insbesondere in Echtzeit, ausgestaltet ist.

7. Anordnung nach einem der vorhergehenden Ansprüche, **dadurch gekennzeichnet, dass** das Steuermodul (16) Speichermittel (55) zur Speicherung der Bildanalysedaten (44) und/oder der Bilddaten (57), insbesondere von Bildsequenzen, aufweist.

8. Anordnung nach Anspruch 7, **dadurch gekennzeichnet, dass** die Speichermittel (55) zur Langzeit-Speicherung in Abhängigkeit von einer Auslösebedingung ausgestaltet sind.

9. Anordnung nach einem der vorhergehenden Ansprüche, **dadurch gekennzeichnet, dass** die Schnittstellenmittel (66) des Steuermoduls (16) zum Senden eines Speicherbefehls (94) zum Speichern einer Bildsequenz und/oder zum Senden eines Abrufbefehls (96) zum Abrufen von bei der Bilderfassungsvorrichtung (45) gespeicherten Bildsequenzen und/oder zum Senden eines Analysebefehls zum Analysieren einer gespeicherten Bildsequenz an die Bilderfassungsvorrichtung (45) ausgestaltet sind.

10. Anordnung nach einem der vorhergehenden Ansprüche, **dadurch gekennzeichnet, dass** die Steuermittel (64) und/oder die Schnittstellenmittel (66) des Steuermoduls (16) zur Parametrierung und/oder Programmierung der Bilderfassungsvorrichtung (45) ausgestaltet sind.

11. Anordnung nach Anspruch 10, **dadurch gekennzeichnet, dass** das Steuermodul (16) zum Senden von Parameterdaten (93) zur Identifizierung und/oder Qualifizierung des bewegten Objekts (36) an die Bilderfassungsvorrichtung (45) ausgestaltet ist.

12. Anordnung nach einem der vorhergehenden Ansprüche, **dadurch gekennzeichnet, dass** das Steuermodul (16) durch einen Prozessor ausführbaren Programmcode enthält.

13. Anordnung nach einem der vorhergehenden Ansprüche, **dadurch gekennzeichnet, dass** das Steuermodul (16) einen Bestandteil einer fluidtechnische, insbesondere pneumatischen, Ventilbatterie (17) mit mehreren Arbeitsanschlüssen zum Anschluss und Ansteuern von fluidtechnisch betreibbaren Aktoren (28,29,30) bildet, wobei die Ventilbatterie (17) in einer Reihenrichtung angeordnete Montageplätze (22) für Ventilmodule (23-25) aufweist, die jeweils mindestens ein mit einem beweglichen Ventilglied ausgestattetes Ventil enthalten, und wobei mindestens ein Aktor (28,29,30) zum Bewegen eines Objekts (36) vorgesehen ist.

14. Bilderfassungsvorrichtung (45) zur Erfassung von Bilddaten (57) des bewegten Objekts (36) für eine Anordnung nach einem der vorhergehenden Ansprüche, **dadurch gekennzeichnet, dass** sie zur Erzeugung von Bildanalysedaten (44) anhand einer geometrischen und/oder einer dynamischen Analyse einer Bewegungsbahn (39) des bewegten Objekts (36) und zum Senden der Bildanalysedaten (44) an das Steuermodul (16) ausgestaltet ist.

## Claims

1. Assembly with a control module (16) and an image acquisition device (45) connected to the control module for the acquisition of image data (57) of the moved object (36), wherein the control module has control means (64) for the activation of one or more actuators (28, 29, 30) by which an object (36) may be moved, and interface means (66) for the image acquisition device (45), **characterised in that** the image acquisition device (45) is designed to generate image analysis data (44) with the aid of a geometric and/or dynamic analysis of a movement path (39) of the moved object (36), and that the control means (64) of the control module (16) are designed to activate one or more of the actuators (28, 29, 30) depending on the image analysis data (44).

2. Assembly according to claim 1, **characterised in that** the one or more actuators (28, 29, 30) may be driven by fluidic and/or electrical means.

3. Assembly according to claim 1 or 2, **characterised in that** the control module (16) is designed to control a fluidic valve bank (17) with several operating connections for the connection and activation of actuators (28, 29, 30) which may be operated by fluidic means, wherein the valve bank (17) has mounting locations (22) for valve modules (23-25) arranged side-by-side, each containing a valve equipped with a moving valve member.

4. Assembly according to any of the preceding claims, **characterised in that** the interface means (66) and/or the control means (64) of the control module (16) are designed for the activation and/or deactivation of the image acquisition device (45) for image analysis.

5. Assembly according to any of the preceding claims, **characterised in that** the control means (64) of the control module (16) are designed for the direct or indirect activation of the one or more actuators (28, 29, 30).

6. Assembly according to any of the preceding claims, **characterised in that** the image acquisition device (45) is designed for evaluation of the image data (57) at a speed corresponding to the movement speed of the one or more actuators (28, 29, 30), in particular in real time.

7. Assembly according to any of the preceding claims, **characterised in that** the control module (16) has memory means (55) for the storage of image analysis data (44) and/or image data (57), in particular image sequences.

8. Assembly according to claim 7, **characterised in that** the memory means (55) are designed for long-term storage depending on a trigger condition.

9. Assembly according to any of the preceding claims, **characterised in that** the interface means (66) of the control module (16) are designed for the transmission of a store instruction (94) for the storage of an image sequence and/or for the transmission of a readout instruction (96) for the readout of image sequences stored by the image acquisition device (45) and/or for the transmission of an analyse instruction to the image acquisition device (45) for the analysis of a stored image sequence.

10. Assembly according to any of the preceding claims, **characterised in that** the control means (64) and/or the interface means (66) of the control module (16) are designed for the parameterisation and/or programming of the image acquisition device (45).

11. Assembly according to claim 10, **characterised in that** the control module (16) is designed for the transmission of parameter data (93) to the image acquisition device (45) for the identification and qualification of the moved object (36).

12. Assembly according to any of the preceding claims, **characterised in that** the control module (16) contains program code which may be executed by a processor.

13. Assembly according to any of the preceding claims, **characterised in that** the control module (16) forms an integral part of a fluidic, in particular pneumatic, valve bank (17) with several operating connections for the connection and activation of actuators (28, 29, 30) operable by fluidic means, wherein the valve bank (17) has mounting locations (22) for valve modules (23-25) arranged side-by-side, each containing a valve equipped with a moving valve member, and wherein one or more actuators (28, 29, 30) is/are provided for the movement of an object (36).

14. Image acquisition device (45) for the acquisition of image data (57) of the moved object (36) for an assembly according to any of the preceding claims, **characterised in that** it is designed to generate image analysis data (44) with the aid of a geometric and/or dynamic analysis of a movement path (39) of the moved object (36), and to transmit the image analysis data (44) to the control module (16).

## Revendications

1. Système avec un module de commande (16) et un dispositif de saisie d'image (45) relié au module de commande pour la saisie de données d'image (57) de l'objet déplacé (36), le module de commande comportant des moyens de commande (64) pour la commande d'au moins un actionneur (28, 29, 30) au moyen duquel un objet (36) est déplaçable, et des moyens d'interfaçage (66) pour le dispositif de saisie d'image (45), **caractérisé en ce que** le dispositif de saisie d'image (45) est prévu pour la génération de données d'analyse d'image (44) sur la base d'une analyse géométrique et/ou dynamique d'un trajet de déplacement (39) de l'objet déplacé (36), et **en ce que** les moyens de commande (64) du module de commande (16) sont prévus pour la commande du au moins un actionneur (28, 29, 30) en fonction des données d'analyse d'image (44).

2. Système selon la revendication 1, **caractérisé en ce que** le au moins un actionneur (28, 29, 30) est entraînable par une technologie fluidique et/ou électriquement.

3. Système selon la revendication 1 ou 2, **caractérisé en ce que** le module de commande (16) est prévu pour la commande d'une batterie de vannes (17) à technologie fluidique avec plusieurs raccords de travail pour la connexion et la commande d'actionneurs (28, 29, 30) entraînables par une technologie fluidique, la batterie de vannes (17) comportant des emplacements de montage (22) disposés dans une direction d'alignement pour des modules de vannes (23 - 25) contenant chacun au moins une vanne pourvue d'un organe mobile de vanne.

4. Système selon l'une des revendications précédentes, **caractérisé en ce que** les moyens d'interfaçage (66) et/ou les moyens de commande (64) du module de commande (16) sont prévus pour activer et/ou désactiver le dispositif de saisie d'image (45) pour une analyse d'image.

5. Système selon l'une des revendications précédentes, **caractérisé en ce que** les moyens de commande (64) du module de commande (16) sont prévus pour la commande directe ou indirecte du au moins un actionneur (28, 29, 30).

6. Système selon l'une des revendications précédentes, **caractérisé en ce que** le dispositif de saisie d'image (45) est prévu pour l'exploitation des données d'image (57) à une vitesse correspondant à la vitesse de déplacement du au moins un actionneur (28, 29, 30), en particulier en temps réel.

7. Système selon l'une des revendications précédentes, **caractérisé en ce que** le module de commande (16) comporte des moyens à mémoire (55) pour la sauvegarde des données d'analyse d'image (44) et/ou des données d'image (57), en particulier de séquences d'images.

8. Système selon la revendication 7, **caractérisé en ce que** les moyens à mémoire (55) sont prévus pour une sauvegarde de longue durée en fonction d'une condition de déclenchement.

9. Système selon l'une des revendications précédentes, **caractérisé en ce que** les moyens d'interfaçage (66) du module de commande (16) sont prévus pour l'envoi d'une instruction de sauvegarde (94) pour la sauvegarde d'une séquences d'images et/ou pour l'envoi d'une instruction d'appel (96) pour l'appel de séquences d'images sauvegardées sur le dispositif de saisie d'image (45) et/ou pour l'envoi au dispositif de saisie d'image (45) d'une instruction d'analyse pour l'analyse d'une séquence d'images sauvegardée.

10. Système selon l'une des revendications précédentes, **caractérisé en ce que** les moyens de commande (64) et/ou les moyens d'interfaçage (66) du module de commande (16) sont prévus pour le paramétrage et/ou la programmation du dispositif de saisie d'image (45).

11. Système selon la revendication 10, **caractérisé en ce que** le module de commande (16) est prévu pour l'envoi au dispositif de saisie d'image (45) de données de paramètres (93) pour l'identification et/ou la qualification de l'objet déplacé (36).

12. Système selon l'une des revendications précédentes, **caractérisé en ce que** le module de commande (16) contient un code-programme exécutable par un processeur.

13. Système selon l'une des revendications précédentes, **caractérisé en ce que** le module de commande (16) forme un composant d'une batterie de vannes (17) à technologie fluidique, en particulier pneumatique, avec plusieurs raccords de travail pour la connexion et la commande d'actionneurs (28, 29, 30) entraînables par une technologie fluidique, la batterie de vannes (17) comportant des emplacements de montage (22) disposés dans une direction d'alignement pour des modules de vannes (23 - 25) contenant chacun au moins une vanne pourvue d'un organe mobile de vanne, et au moins un actionneur (28, 29, 30) étant prévu pour le déplacement d'un objet (36).

14. Dispositif de saisie d'image (45) pour la saisie de données d'image (57) de l'objet déplacé (36) pour un système selon l'une des revendications précédentes, **caractérisé en ce qu'**il est prévu pour la génération de données d'analyse d'image (44) sur la base d'une analyse géométrique et/ou dynamique d'un trajet de déplacement (39) de l'objet déplacé (36), et pour l'envoi au module de commande (16) des données d'analyse d'image (44).
